# EUROPÄISCHE PATENTSCHRIFT

(11) **EP 3 215 320 B1**
(45) Veröffentlichungstag und Bekanntmachung des Hinweises auf die Patenterteilung: **13.10.2021**
(21) Anmeldenummer: 15787569.1
(22) Anmeldetag: 28.10.2015
(51) Int. Cl.: B25J 13/08, B25J 19/00

(54) **ABDECKVORRICHTUNG ZUM SCHUTZ VON SENSOREN**
COVERING DEVICE FOR PROTECTING SENSORS
DISPOSITIF DE RECOUVREMENT POUR LA PROTECTION DE CAPTEURS

(30) Priorität: 06.11.2014 DE 102014222675
(43) Veröffentlichungstag der Anmeldung: 13.09.2017
(73) Patentinhaber: KUKA Deutschland GmbH, 86165 Augsburg (DE)
(72) Erfinder: EISENWINTER, Leander, 86647 Buttenwiesen/Lauterbach (DE); NITZ, Gernot, 86368 Gersthofen (DE); TSCHARNUTER, Dietmar, 86316 Friedberg/Stätzling (DE)
(74) Vertreter: Mader, Joachim
(86) Internationale Anmeldenummer: PCT/EP2015/074997
(87) Internationale Veröffentlichungsnummer: WO 2016/071179

(56) Entgegenhaltungen:
- US-A- 5 920 171
- US-A1- 2010 191 374
- US-A1- 2011 098 852

## Beschreibung

### 1. Gebiet der Erfindung

Die Erfindung betrifft einen Industrieroboter, wie insbesondere einen Gelenkroboter, mit einer Vorrichtung zum Schutz von Sensorik des Roboters vor Verschmutzung.

### 2. Hintergrund

Roboter, die in der Industrie verwendet werden, sind programmierbare Maschinen, die ausgebildet sind zur automatischen Handhabung oder Bearbeitung von Objekten bzw. Werkstücken. Gelenkroboter sind in der Industrie sehr verbreitet und umfassen üblicherweise ein Gestell, welches über ein erstes Drehgelenk mit einem Karussell verbunden ist. Das Karussell kann über einen ersten Antriebsmotor relativ zu dem Gestell bewegt werden. Ferner umfasst ein Gelenkroboter typischerweise mehrere Glieder. Das Glied, das über ein zweites Drehgelenk mit dem Karussell verbunden ist, wird auch als Schwinge bezeichnet. Die Schwinge kann über einen zweiten Antriebsmotor relativ zu dem Karussell bewegt werden. Ferner ist an einem Gelenkroboter üblicherweise zumindest ein weiteres Glied, der sogenannte Arm, vorgesehen, das über ein drittes Drehgelenk mit der Schwinge verbunden ist und über einen dritten Antriebsmotor bewegt werden kann. Durch eine solche Anordnung aus mehreren, über Drehgelenke miteinander verbundenen Gliedern, wird eine hohe Bewegungsfreiheit des Gelenkroboters ermöglicht, da die jeweiligen Gelenke Drehungen um verschiedene Achsen und damit viele Möglichkeiten bei der Handhabung oder Bearbeitung von Objekten erlauben. Zur Steuerung und Überwachung des Roboters sind daher vielfältige Sensoriken notwendig. Diese Sensoriken sind teilweise anfällig für Verschmutzungen, insbesondere diejenigen Sensoriken, die nicht im Inneren des Roboters angeordnet sind. Beispielsweise können bei der spanenden Bearbeitung von Werkstücken Partikel (z. B. Späne) entstehen, die sich an dem Roboter ablegen und insbesondere die außenliegenden Sensoriken in ihrer Funktion beeinträchtigen.

Industrieroboter weisen beispielweise Sensoren auf, um zurückgelegte Wege und damit Positionen der einzelnen Glieder im Raum bzw. relativ zueinander bestimmen zu können. Zur Erfassung des Weges sind induktive Sensoren mit Transformatorwandler verbreitet, die mit einem gelochten Stahlband als Indikatorband zusammenwirken. Das Indikatorband wird an einem ersten Glied des Roboters angebracht und der Sensor an einem anderen Bauteil, das über ein Drehgelenk drehbar an dem ersten Glied gelagert ist (oder umgekehrt). Bei einer relativen Bewegung von Glied und Bauteil fährt der Sensor bzw. der Kopf des Sensors an dem Indikatorband entlang und erfasst die am Band vorgesehenen Indikatoren, wodurch eine Bestimmung des zurückgelegten Weges möglich ist. Grundsätzlich sind auch andere Sensoriken möglich, wie etwa magnetische, optische oder haptische Sensoriken, die mit Fühlern, sogenannten "Whiskern" arbeiten. Bei magnetischen Verfahren ist das Indikatorband im einfachsten Fall ein Maßband mit z.B. periodisch aufeinanderfolgenden Nord- und Südpolen, bei optischen Verfahren ist das Indikatorband im einfachsten Fall ein Maßband mit z.B. optisch erfassbaren Skalen. Wenn der Kopf des Sensors über das Maßband geführt wird, werden die Skalen erfasst, wodurch eine Wegbestimmung möglich ist.

US 2010/0191374 A1 betrifft eine Robotervorrichtung mit einem Steuersystem. Ein Drehgelenk der Robotervorrichtung kann eine Sensorvorrichtung aufweisen. Die Sensorvorrichtung kann eine Inkrementskala aufweisen.

US 2011/0098852 A1 betrifft eine Robotervorrichtung, wobei eine Skala von einem ringförmigen Element umhüllt sein kann.

Derartige Sensoren sind häufig besonders anfällig gegenüber Verschmutzungen, die die Signalqualität oder Funktion der verwendeten Sensoren reduzieren können, insbesondere, da sie oft außen am Roboter angeordnet sind. Im Extremfall können Verschmutzungen (wie die oben erwähnten Späne) sogar zur Zerstörung des Sensors oder von Teilen des Sensors führen. Um dies zu vermeiden, muss die Sensorik in regelmäßigen Abständen gereinigt oder gar getauscht werden, so dass in dieser Zeit der Roboter nicht verfügbar ist.

Aufgabe der Erfindung ist es, einen Roboter bereitzustellen, dessen Sensorvorrichtung zur Erfassung relativer Drehbewegungen vor Verschmutzung und mechanischer Beanspruchung geschützt ist, um eine höhere Verfügbarkeit des Roboters zu gewährleisten. Diese Aufgabe wird mit einem Industrieroboter gemäß Anspruch 1 gelöst.

### 3. Ausführliche Beschreibung der Erfindung

Die erfindungsgemäße Lösung der Aufgabe ist besonders vorteilhaft, da durch die Anordnung der Abdeckvorrichtung, die leicht zu fertigen, sowie leicht anzubringen ist, ein effizienter Schutz der empfindlichen Sensorvorrichtung vor Verschmutzungen, wie z.B. Metallspänen, erzielt wird. Insbesondere kann das Indikatorband auf diese Weise geschützt werden, ohne dass die Gefahr einer Blockierung oder Überdeckung von Teilen des Indikatorbandes oder des Sensors besteht, was zu einer falschen Messung führen könnte. Daneben werden durch den Schutz der Sensorvorrichtung auch ein geringerer Verschleiß und ein geringeres Ausfallrisiko der Sensorvorrichtung und damit des Roboters erzielt. Dies führt zu einer verbesserten Einsatzdauer des Roboters und reduzierten, wartungsbedingten Ausfällen. Unter einem Glied oder einem Bauteil werden in dieser Anmeldung die verschiedenen zueinander bewegbaren Teile des Roboters verstanden, wie z.B. die Schwinge, die verschiedenen Arme usw. aber auch z.B. das Gestell oder das Karussell.

Generell bevorzugt ist die Abdeckvorrichtung mittels einer Klemmverbindung an dem Glied oder dem anderen Bauteil angeordnet, so dass sie das jeweilige Drehgelenk zwischen Glied und Bauteil umgibt. Eine solche Ausgestaltung ermöglicht ein einfaches Anbringen bzw. Entfernen der erfindungsgemäßen Vorrichtung an dem Roboter. Eine Klemmverbindung ermöglicht es vorteilhaft die Vorrichtung nachträglich an einem Drehgelenk, bzw. an dem Glied oder an dem entsprechenden Bauteil eines Roboters anzubringen.

Bevorzugt ist die Abdeckvorrichtung allgemein ringförmig gestaltet und umringt das Drehgelenk zwischen Glied und Bauteil vorzugsweise vollumfänglich, d.h. es ist in Form eines Rings um das Drehgelenk herum angeordnet, um das Indikatorband und zumindest den Kopf des Sensors abzudecken. Es ist jedoch alternativ möglich, dass die ringförmige Abdeckvorrichtung nur ein Teil eines Rings ist (ein Ringsegment), jedoch sollte dieses Teil bzw. das Ringsegment möglichst groß sein, um das Drehgelenk zumindest um 270° zu umringen, mehr bevorzugt um zumindest 300°, noch mehr bevorzugt um zumindest 330° und - wie erwähnt - am meisten bevorzugt um 360° (d.h. vollumfänglich). Abhängig von der jeweiligen Positionierung der Abdeckvorrichtung am Roboter kann eine zweiteilige Ausgestaltung der Vorrichtung vorteilhaft sein.

Vorzugsweise ist die Abdeckvorrichtung ringförmig und hat einen L- oder U-förmigen Querschnitt und umringt das Drehgelenk zwischen Glied und anderem Bauteil zumindest teilweise, d.h. wie im obigen Absatz angegeben. Dabei liegen die Stege des L- oder U-förmigen Querschnitts jeweils in einer Ebene und sind zum Inneren der ringförmigen Abdeckvorrichtung gerichtet. Der Fuß bzw. die Basis des L- oder U-förmigen Querschnitts bildet dann den äußeren Umfang der ringförmigen Abdeckvorrichtung. Alternativ können die Stege des L- oder U-förmigen Querschnitts so angeordnet sein, dass sie Wände eines Zylinders bilden.

Vorzugsweise ist die Abdeckvorrichtung mit Bürsten versehen, die derart ausgebildet sind, um das Eindringen von Schmutz in einen Spalt zwischen der Abdeckvorrichtung und einer von der Abdeckvorrichtung abgedeckten Oberfläche (auf der sich das Indikatorband befindet) des Roboters zu verhindern. Bei einer bevorzugten Ausbildung der Abdeckvorrichtung mit L- oder U-förmigen Querschnitt sind insbesondere die Stege (d.h. zumindest ein Steg bei einer U-förmigen Ausbildung) mit den Bürsten versehen. Die Fasern bzw. Borsten weisen vorzugsweise in dieselbe Richtung wie die Stege, also z.B. zum Inneren der ringförmigen Abdeckvorrichtung, und sie erstrecken sich über die Stege hinaus. Die Bürsten können anfallende makroskopische Partikel, aber auch kleinere Partikel, wirksam abhalten und dadurch eine bessere Funktionsfähigkeit der Sensorvorrichtung und somit des Gelenkroboters ermöglichen, wenn auch das Eindringen von Schmutz naturgemäß nie vollständig verhindert werden kann. Vorzugsweise sind die Bürsten derart ausgebildet, dass sie zusätzlich oder alternativ auch Schmutz vom Indikatorband abstreifen.

Generell bevorzugt ist die Abdeckvorrichtung aus mehreren Ringsegmenten aufgebaut, wie insbesondere zwei, die miteinander vorzugsweise zu einem vollständigen Ring verbunden werden können. Eine mehrteilige Ausgestaltung der Abdeckvorrichtung ermöglicht eine vereinfachte Montage und Demontage der Abdeckvorrichtung an bzw. um das Drehgelenk zwischen zwei Gliedern bzw. Bauteilen des Roboters.

Vorzugsweise ist die Abdeckvorrichtung mit Befestigungselementen an dem Bauteil oder an dem Glied befestigt, an dem sich der Sensor befindet. Bei einer Bewegung des Roboters werden Sensor und Abdeckvorrichtung somit nicht relativ zueinander bewegt, sondern beide werden relativ zu dem Indikatorband bewegt, das funktionsgemäß an dem jeweils anderen Glied bzw. Bauteil angeordnet sein muss.

Vorzugsweise ist das Indikatorband ein gelochtes Stahlband und der Sensor ein induktiver Sensor mit Transformatorwandler. Induktive Sensoren mit Transformatorwandler sind besonders unempfindlich gegen Verschmutzung und ermöglichen eine berührungslose Messung der relativen Drehbewegung, zum Beispiel mittels Winkel- oder Wegmessung. Es ist aber auch denkbar, andere Sensorvorrichtungen zu verwenden. Neben induktiven Sensoren können beispielsweise auch optische Sensoren verwendet werden. Solche Sensoren umfassen in der Regel Fotowiderstände, Fotodioden oder Fototransistoren. Daneben gibt es auch Ultraschallsensoren oder mechanische Sensoren.

### 4. Beschreibung von bevorzugten Ausführungsformen

Weitere vorteilhafte Ausgestaltungen der Erfindung werden im Zusammenhang mit den nachstehend wiedergegebenen Figuren erläutert. Dabei zeigt:
- Fig. 1: eine dreidimensionale Ansicht eines Roboter, an dem Abdeckvorrichtungen angeordnet sind;
- Fig. 2: eine dreidimensionale Detailansicht des Roboters von Fig. 1;
- Fig. 3: eine Ansicht der abtriebsseitigen Sensoreinheit an der Achse 1 mit einem Teil derAbdeckvorrichtung;
- Fig. 4: eine Ansicht einer Abdeckvorrichtung;
- Fig. 5: eine weitere Ansicht einer Abdeckvorrichtung;
- Fig. 6: eine weitere Teil- bzw. Detailansicht des Roboters von Fig. 1 aus einer anderen Perspektive;
- Fig. 7: eine Teil- bzw. Detailansicht eines weiteren Arms bzw. Glieds des Roboters von Fig. 1;
- Fig. 8: den Arm bzw. das Glied von Fig. 7 von einer anderen Perspektive;
- Fig. 9: eine weitereAbdeckvorrichtung;
- Fig. 10: noch eine weitere Abdeckvorrichtung;
- Fig. 11: eine Querschnittsansicht der Abdeckvorrichtung von Fig. 9 bzw. 10; und
- Fig. 12: eine weitere Detailansicht des Roboters von Fig. 1**.**

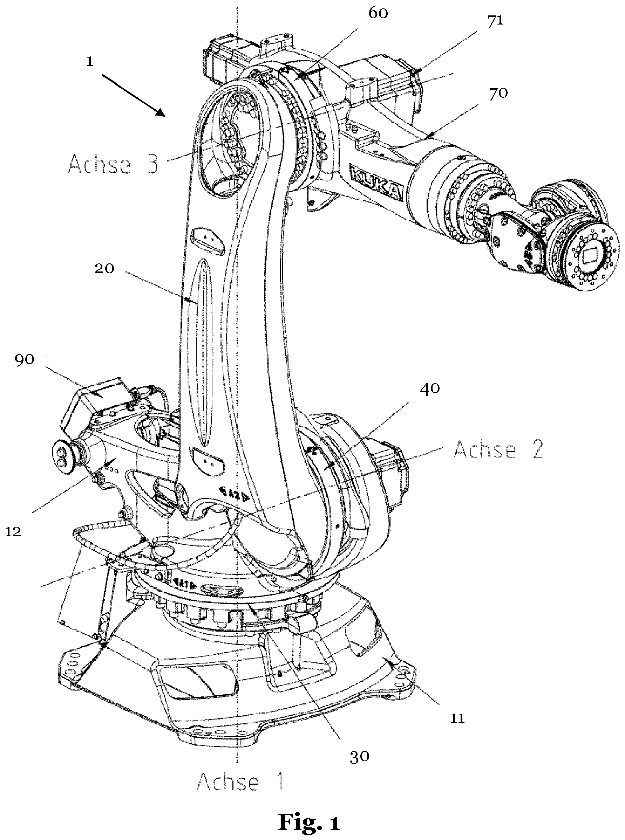

Figur 1 zeigt in einer Ansicht einen industriellen Gelenkroboter 1 mit mehreren Drehgelenken. Ein erstes Drehgelenk befindet sich zwischen einem Gestell 11 und einem Karussell 12. Hierdurch kann sich das Karussell 12 relativ zu dem Gestell 11 um eine erste Achse (Achse 1) drehen. Ein zweites Drehgelenk befindet sich zwischen dem Karussell 12 und der Schwinge 20 (Achse 2). Ein drittes Drehgelenk befindet sich zwischen der Schwinge 20 und dem Arm 70 (Achse 3). In den Figuren sind weitere Bauteile des Roboters, wie etwa Hydraulikzuführungen, Motoren, etc. dargestellt, die jedoch für das Verständnis der vorliegenden Erfindung nicht notwendig sind, so dass auf eine detaillierte Beschreibung derselben hierin verzichtet wird.

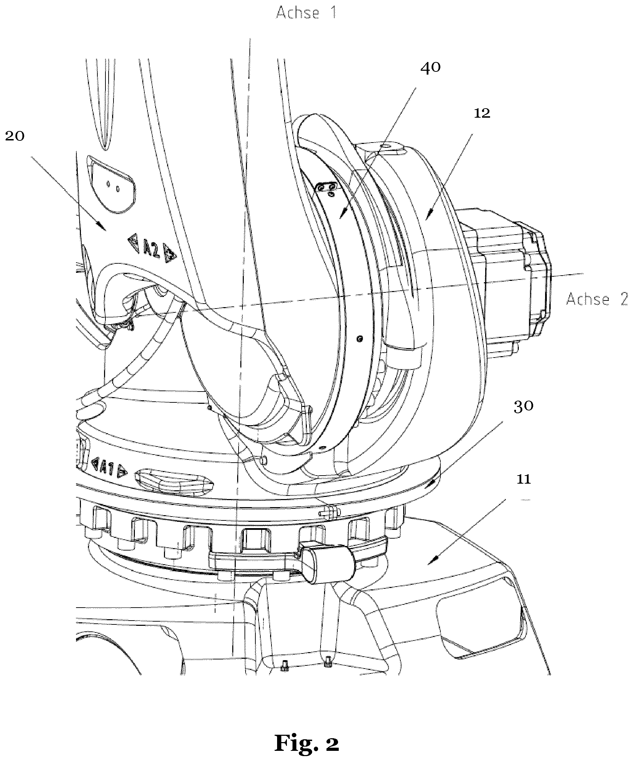

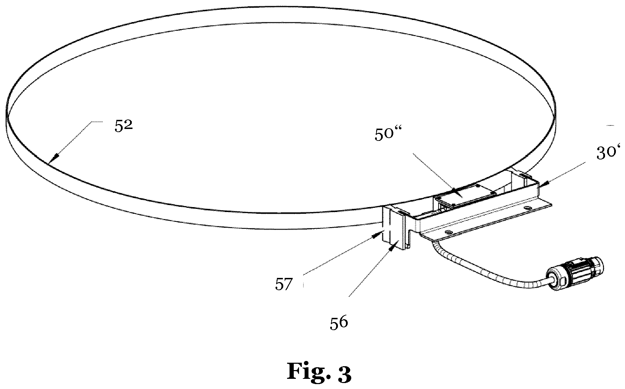

Figur 2 zeigt in einer Teilansicht Details des Gelenkroboters 1**.** In unmittelbarer Umgebung des ersten und zweiten Drehgelenks ist jeweils ein Indikatorband (nicht sichtbar in Fig. 2) mit zugehörigem Sensor (in den Figuren 3, 6 und 8 gezeigt) vorgesehen. Die im Zusammenhang mit dieser Erfindung beschriebenen Sensoren dienen bevorzugt der Messung einer Relativbewegung, zum Beispiel mittels Längen- und Winkelmessung. Die Messung einer Länge oder eines Winkels durch den Sensor in Verbindung mit dem Indikatorband kann zum Beispiel induktiv erfolgen. Hierbei ist das Indikatorband als gelochtes Stahlband ausgebildet und der Sensor ist ein induktiver Sensor mit Transformatorwandler. Um einer Verschmutzung oder Zerstörung der Messvorrichtung bzw. Messsensorik vorzubeugen, die beispielsweise entstehen kann, wenn bei spanender Bearbeitung makroskopische Partikel auf den Sensor oder auf das Indikatorband gelangen, sind erfindungsgemäß Abdeckvorrichtungen 30, 40 und 60 vorgesehen, die das Indikatorband und zumindest den Kopf des Sensors abdecken. Wie in den Figuren gezeigt, sind diese Abdeckvorrichtungen vorzugsweise ringförmig und umringen das jeweilige Drehgelenk zwischen den zueinander beweglichen Gliedern des Roboters - wie zwischen Gestell 11 und Karussell 12 - um 360° und verhindern so eine Verschmutzung des Indikatorbandes und des Sensors bzw. des Kopfs des Sensors.
Figur 3 zeigt ein Indikatorband 52 sowie den Sensor 50" mit einem Teil 30' der Abdeckvorrichtung 30, welches mit Bürstenelementen 56 versehen ist. Die restlichen Teile der Abdeckvorrichtung 30 sind entfernt worden bzw. nicht dargestellt, um das ansonsten abgedeckte Indikatorband 52 und den abgedeckten Sensor 50" zu zeigen. Die Bürstenelemente 56 sind mit Reihen von Faserbündeln 57 versehen, die den Schmutz vom Indikatorband 52 abstreichen und somit verhindern, das Partikel zwischen Indikatorband 52 und Sensor 50" gelangen.

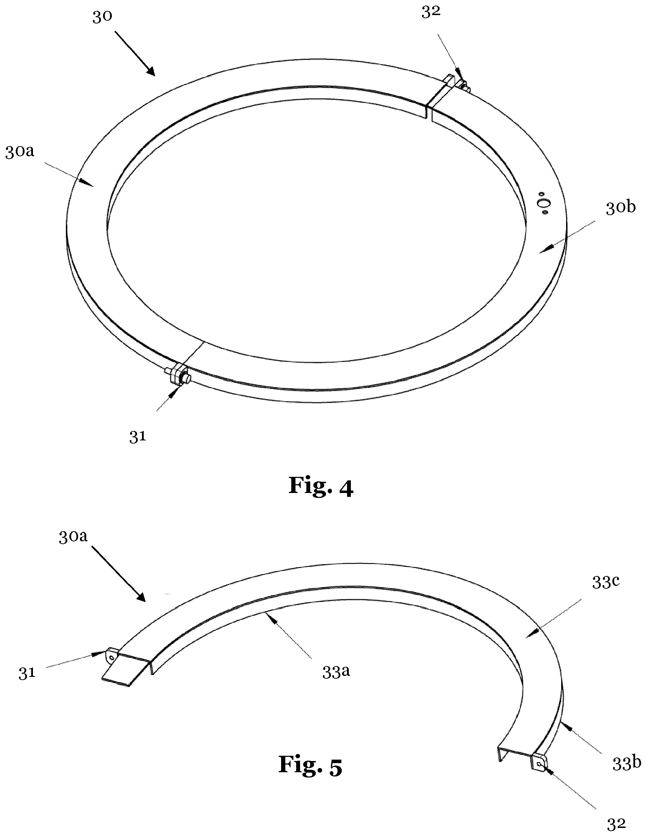

Figur 4 zeigt die aus zwei komplementären Hälften 30a, 30b zusammengesetzte ringförmige Abdeckvorrichtung 30 und Fig. 5 die Hälfte 30a der Abdeckvorrichtung 30. In diesem Beispiel ist die ringförmige Abdeckvorrichtung 30 aus zwei Ringsegmenten (d.h. den Hälften 30a und 30b) gebildet und weist ein U-förmiges Querschnittsprofil auf, mit zwei Stegen 33a und 33b und einer die Stege verbindenden Basis 33c. Die Stege 33a und 33b bilden die Wände eines (niedrigen) Zylinders, so dass die Konstruktion einem ringförmigen Kanal ähnelt. Der außenliegende Steg 33b bildet den Außenumfang der ringförmigen Abdeckvorrichtung. Die Abdeckvorrichtung 30 wird mittels einer Klemmverbindung an dem Karussell bzw. dem Gestell (um die Achse 1) befestigt. Die Verbindung der beiden Ringsegmente bzw. Hälften 30a, 30b erfolgt über zwei Schraubverbindungen 31, 32. Darüber hinaus ist es auch möglich, die Abdeckvorrichtungen fest mit dem Roboter zu verbinden, oder diese sogar integral mit einem Teil des Roboters auszubilden.

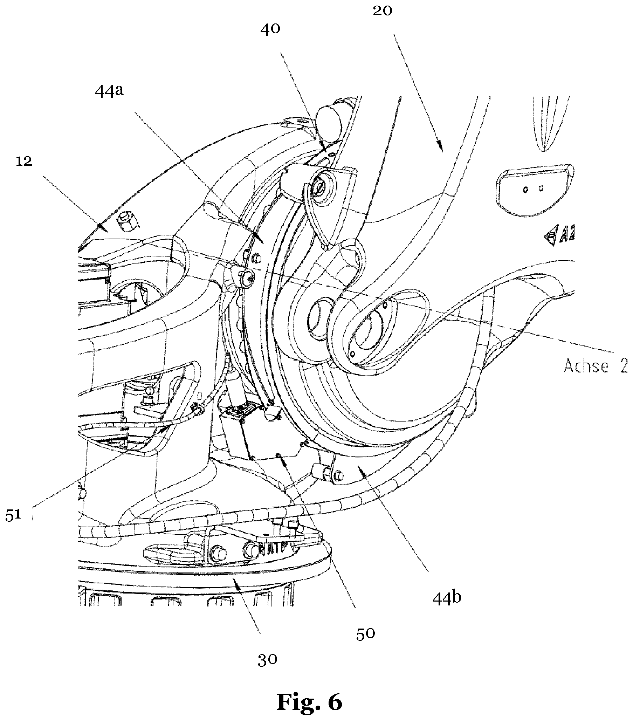

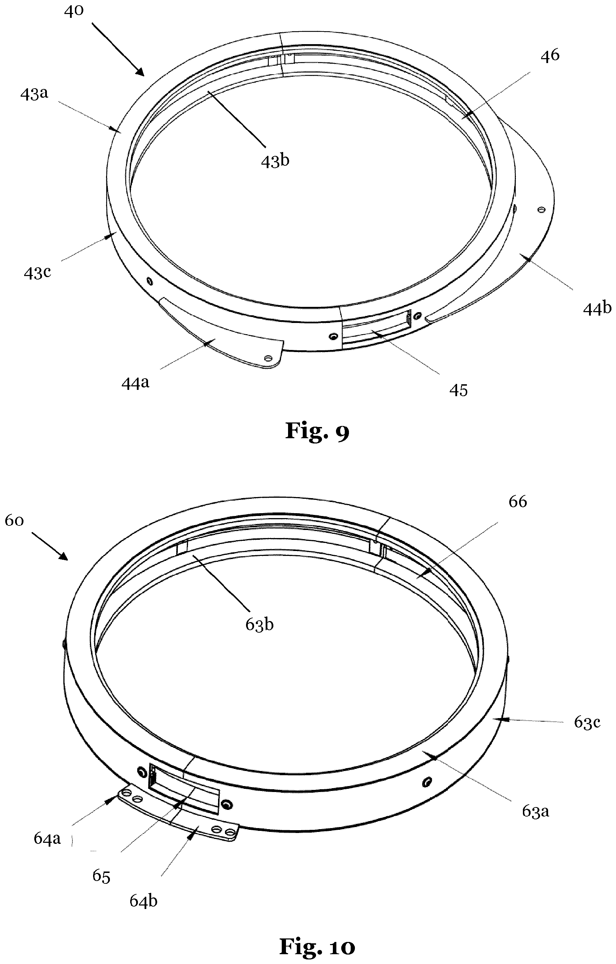

Figur 6 zeigt die in Figur 2 gezeigten Elemente des Roboters 1 von einer anderen Perspektive. In der Perspektive der Figur 6 ist ein weiterer Sensor 50 zu erkennen. Aus einer Zusammenschau der Figuren 2 und 6 erkennt man zudem, wie die Abdeckvorrichtung 40 ringförmig das Gelenk zwischen Schwinge 20 und Karussell 12 um 360° umringt bzw. umgibt. Die Abdeckvorrichtung 40 deckt dabei vollständig das Indikatorband und den Kopf des Sensors 50 ab, der aus diesem Grund in Figur 6 nicht zu sehen ist, so dass die Sensorvorrichtung vor Schmutz geschützt ist. Die Abdeckvorrichtung 40 weist zwei Flügel auf, die als Befestigungselemente 44a und 44b dienen (s. auch Figur 9). In diesem gezeigten Beispiel ist die Abdeckvorrichtung 40 über diese Befestigungselemente 44a, 44b mit dem Karussell 12 fest verschraubt. Der Sensor ist wiederum an der Abdeckvorrichtung 40 befestigt und somit (indirekt) auch an dem Karussell. Dem Fachmann ist klar, dass sich das nicht sichtbare Indikatorband an der Schwinge 20 befindet (befinden muss), so dass bei einer Drehbewegung der Schwinge 20 relativ zum Karussell 12 der Sensor 50 anhand der Indikatoren des Indikatorbandes die Drehbewegung erfassen kann. Die gesammelten Daten werden über eine Datenleitung 51 zu einer geeigneten Steuervorrichtung übertragen.

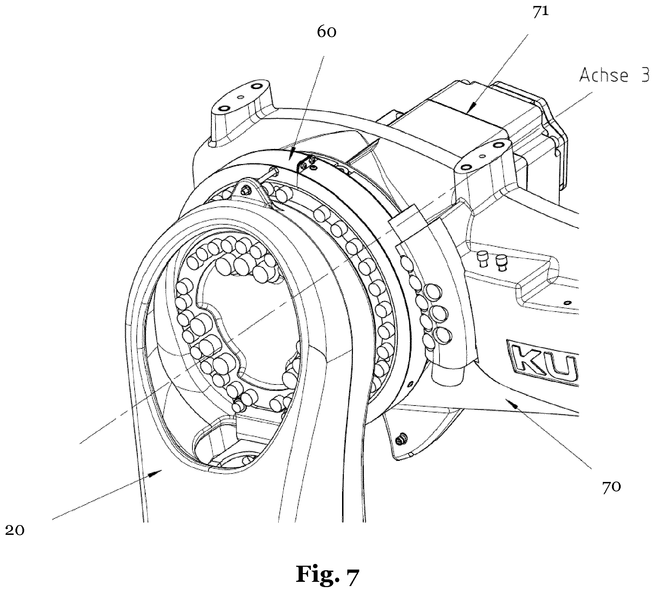

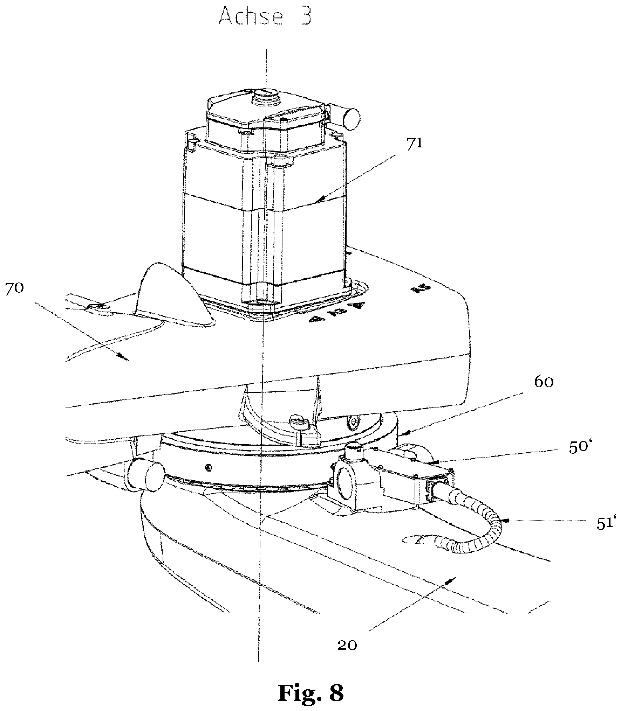

Die Figuren 7 und 8 zeigen weitere Details des Roboters 1 aus zwei verschiedenen Perspektiven. An der Schwinge 20 ist ein Arm 70 drehbar eingerichtet, der über einen Motor 71 relativ zur Schwinge 20 gedreht werden kann. Zur Erfassung der Drehbewegung ist auch hier zwischen Schwinge 20 und Arm 70 eine Sensorvorrichtung vorgesehen, die einen Sensor 50' (in Figur 8 gezeigt) sowie ein zugehöriges Indikatorband umfasst, welches in den Figuren 7 und 8 nicht sichtbar ist, da es von einer Abdeckvorrichtung 60 abgedeckt ist. Der Kopf des Sensors 50' ist ebenfalls von der Abdeckvorrichtung 60 abgedeckt, so dass die Sensorvorrichtung vor Verschmutzung geschützt ist. Wie der Fachmann aus einer Zusammenschau der Figuren 7 und 8 erkennen kann, ist auch die Abdeckvorrichtung 60 ringförmig und umringt das Gelenk zwischen Arm 70 und Schwinge 20 vollständig, d. h. um 360°. Arm 70 und Schwinge 20 können auch beide als Glieder des Roboters bezeichnet werden. Die gesammelten Daten werden über eine Datenleitung 51' zu einer geeigneten Steuervorrichtung übertragen.
In Figur 9 ist die Abdeckvorrichtung 40 im nicht eingebauten Zustand gezeigt. In der Figur 9 sind die Befestigungselemente 44a und 44b zu erkennen, die der Befestigung der Abdeckvorrichtung 40 am Karussell 12 dienen. Weiter ist eine Öffnung 45 für die Aufnahme des Kopfs des Sensors vorgesehen. Die Abdeckvorrichtung 40 ist aus zwei Ringsegmenten gebildet, kann jedoch auch aus einem einteiligen Ring bestehen und ist vorzugsweise aus Metall gefertigt. Wie das Beispiel der Fig. 4 und 5, weist auch das Beispiel der

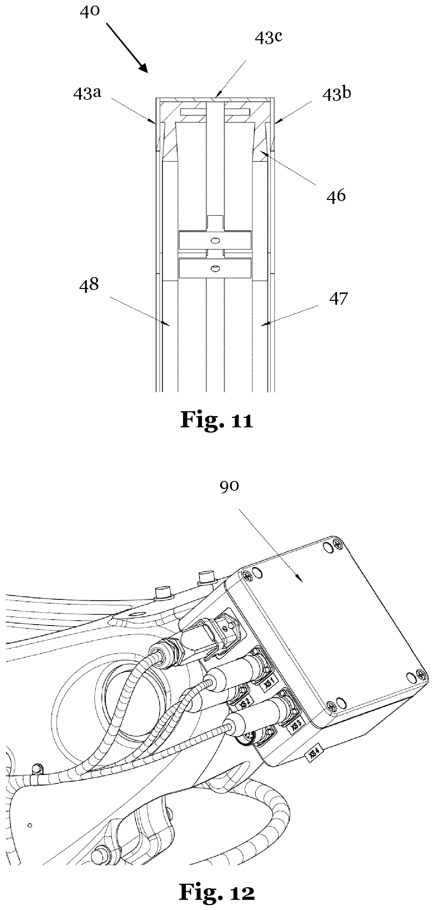

Figur 9 (und 10) einen U-förmigen Querschnitt mit zwei parallelen Stegen 43a, 43b und eine die beiden Stege verbindende Basis 43c auf. Die Stege verlaufen jeweils in einer Ebene und weisen zum Inneren der Abdeckvorrichtung 40, gesehen von der Basis 43c. Im Unterschied zu dem Beispiel der Figuren 4 und 5, weisen die beiden Stege 43a, 43b umlaufend Bürsten eines Bürstenelements 46 auf (in Fig. 11 zu erkennen). Bei der Ausführungsform der Erfindung verhindern die Bürsten wirksam das Eindringen von Staub und Partikeln in den Spalt, der zwangsläufig zwischen der Abdeckvorrichtung 40 und der Oberfläche verbleibt, auf der das Indikatorband eingerichtet oder befestigt ist. Dieser Spalt ist notwendig, da sich die abgebildeten Abdeckvorrichtung 40 und 60 relativ zum Indikatorband drehen müssen, bzw. sich die Oberfläche auf der das Indikatorband angebracht ist relativ zu den Abdeckvorrichtungen drehen muss.
Figur 10 zeigt die Abdeckvorrichtung 60 im nicht eingebauten Zustand. Die Abdeckvorrichtung 60 ist mit der Abdeckvorrichtung 40 im Wesentlichen baugleich, wobei jedoch andere Befestigungselemente 64a und 64b vorgesehen sind. Die Abdeckvorrichtung 60 ist demnach ebenfalls mit einem U-förmigen Querschnitt versehen mit zwei Stegen 63a, 63b und einer Basis 63c, sowie mit einer Öffnung 65 für die Aufnahme des Kopfs des Sensors. Die Abdeckvorrichtung 60 ist mit einem Bürstenelement 66 versehen, das baugleich dem in Fig. 11 gezeigten Bürstenelement ist.
In Figur 11 ist eine Querschnittsansicht der Abdeckvorrichtung 40 gezeigt, aus der die Konstruktion des Bürstenelements 46 besser hervorgeht. Das Bürstenelement 46 besteht im Wesentlichen aus zwei parallelen Reihen 47, 48 von Faserbündeln, die beispielsweise über einen gemeinsamen Gummisteg miteinander verbunden und im Inneren der Abdeckvorrichtung 40 befestigt sind. Die einzelnen Borsten oder Fasern weisen dabei in dieselbe Richtung wie die Stege 43a, 43b und stehen über diese hinaus. Diese Konstruktion ist entsprechend auch an der Abdeckvorrichtung 60 vorgesehen.
In Figur 12 ist ein Steuergerät 90 gezeigt, das über die entsprechenden Datenleitungen 51; 51' bzw. 51" mit den Sensoren in Kommunikation ist. Das Steuergerät 90 verarbeitet die Signale der Sensoren und erlaubt es somit die relativen Drehbewegungen der verschiedenen Bauteile des Roboters 1 geeignet auszuwerten.

### Bezugszeichenliste:

- 1: Roboter
- 11: Gestell
- 12: Karussell
- 20: Schwinge
- 30: Abdeckvorrichtung
- 30': Teil der Abdeckvorrichtung 30 mit Bürstenelement
- 30a, 30b: Hälften der Abdeckvorrichtung
- 31, 32: Befestigungsmittel
- 33a, 33b: Stege
- 33c: Basis
- 40: Abdeckvorrichtung
- 43a, 43b: Stege
- 43c: Basis
- 44a, 44b: Befestigungselemente
- 45: Öffnung
- 46: Bürstenelement
- 47, 48: Reihen von Faserbündeln
- 50: Sensor
- 51: Datenleitung
- 50': Sensor
- 51': Datenleitung
- 50": Sensor
- 51": Datenleitung
- 52: Indikatorband
- 56: Bürstenelement
- 57: Reihen von Faserbündeln
- 60: Abdeckvorrichtung
- 63a, 63b: Steg
- 63c: Basis
- 64a, 64b: Befestigungselemente
- 65: Öffnung
- 66: Bürstenelement
- 70: Arm
- 71: Motor
- 90: Steuergerät

## Patentansprüche

1. Industrieroboter (1), insbesondere Gelenkroboter, umfassend:
zumindest ein Glied (12, 20, 70), das über ein Drehgelenk drehbar an einem anderen Bauteil des Roboters gelagert ist;
eine Sensorvorrichtung zur Erfassung der relativen Drehbewegung zwischen dem Glied (12, 20, 70) und dem anderen Bauteil, wobei die Sensorvorrichtung einen Sensor (50, 50', 50") und ein Indikatorband umfasst, und wobei das Indikatorband an dem Glied (12, 20, 70) und der Sensor (50, 50', 50") an dem anderen Bauteil angeordnet ist, oder umgekehrt;
und wobei der Sensor (50, 50', 50") eingerichtet ist zur Erfassung der am Indikatorband vorgesehenen Indikatoren zur Ermittlung der relativen Drehbewegung zwischen dem Glied und dem Bauteil, wobei der Roboter weiter mindestens eine Abdeckvorrichtung (30; 40; 60) aufweist, die das Indikatorband und zumindest den Kopf des Sensors (50; 50'; 50") abdeckt, um die Sensorvorrichtung vor Schmutz zu schützen, **dadurch gekennzeichnet, dass** die Abdeckvorrichtung (30; 40; 60) mit Bürsten versehen ist, die derart ausgebildet sind, um das Eindringen von Schmutz in einen Spalt zwischen der Abdeckvorrichtung und einer von der Abdeckvorrichtung abgedeckten Oberfläche des Roboters zu verhindern und/oder Schmutz vom Indikatorband abzustreifen.

2. Industrieroboter (1) nach Anspruch 1, wobei die Abdeckvorrichtung (30; 40; 60) ringförmig ist und das Drehgelenk zwischen Glied (12, 20, 70) und anderem Bauteil um zumindest 270° umringt, vorzugsweise zumindest 300°, mehr bevorzugt zumindest 330° und am meisten bevorzugt um 360°.

3. Industrieroboter (1) nach einem der vorhergehenden Ansprüche, wobei die Abdeckvorrichtung (40; 60) ringförmig ist und einen L- oder U-förmigen Querschnitt hat und das Drehgelenk zwischen Glied (20;70) und anderem Bauteil zumindest teilweise umringt, wobei die Stege (43a, 43b; 63a, 63b) des L- oder U-förmigen Querschnitts jeweils in einer Ebene liegen und zum Inneren der ringförmigen Abdeckvorrichtung weisen oder wobei die Stege (33a, 33b) des L- oder U-förmigen Querschnitts Wände eines Zylinders bilden.

4. Industrieroboter (1) nach Anspruch 3, wobei die Stege (43a, 43b; 63a, 63b) der Abdeckvorrichtung mit Bürsten versehen sind, die derart ausgebildet sind, um das Eindringen von Schmutz in einen Spalt zwischen den Stegen der Abdeckvorrichtung und einer von der Abdeckvorrichtung abgedeckten Oberfläche des Roboters zu verhindern, und/oder wobei die Stege der Abdeckvorrichtung (30) mit Bürsten (56) versehen sind, die derart ausgebildet sind, um das Eindringen von Schmutz in einen Bereich um den Sensorkopf, der von der Abdeckvorrichtung (30; 30') abgedeckt wird, zu verhindern.

5. Industrieroboter (1) nach Anspruch 4, wobei die einzelnen Borsten oder Fasern der Bürsten in dieselbe Richtung wie die Stege weisen und über die Stege hinaus stehen.

6. Industrieroboter (1) nach einem der vorhergehenden Ansprüche, wobei die Abdeckvorrichtung (40; 60) mindestens ein Befestigungselement (44a, 44b; 64a, 64b) aufweist, und an dem Bauteil oder an dem Glied des Roboters befestigt ist, an dem sich der Sensor befindet.

7. Industrieroboter (1) nach einem der vorhergehenden Ansprüche, wobei das andere Bauteil (11) das Gestell des Roboters ist und das Glied (12) das Karussell des Roboters, und
wobei der Roboter ein weiteres Glied (20) aufweist, das drehbar an dem Karussell des Roboters gelagert ist, und eine zweite Sensorvorrichtung (50) zur Erfassung der relativen Drehbewegung zwischen dem Karussell und dem weiteren Glied (20), wobei die zweite Sensorvorrichtung einen zweiten Sensor (50) und ein zweites Indikatorband umfasst, und wobei eine zweite ringförmige Abdeckvorrichtung (40) an dem Karussell oder dem weiteren Glied (20) des Roboters angeordnet ist und das zweite Indikatorband und zumindest den Kopf des zweiten Sensors (50) abdeckt, um die zweite Sensorvorrichtung vor Schmutz zu schützen.

8. Industrieroboter nach einem der vorhergehenden Ansprüche, wobei die Abdeckvorrichtung (40; 60) an ihrer Außenseite eine Öffnung (45; 65) für die Aufnahme des Kopfs des Sensors (50; 50') umfasst.

9. Industrieroboter (1) nach einem der vorhergehenden Ansprüche, wobei das Indikatorband ein gelochtes Stahlband und der Sensor ein induktiver Sensor mit Transformatorwandler ist.

## Claims

1. An industrial robot (1), in particular an articulated robot, comprising:
at least one member (12, 20, 70) which is rotatably supported on another component of the robot via a rotary joint;
a sensor device for detecting the relative rotational movement between the member (12, 20, 70) and the other component, wherein the sensor device comprises a sensor (50, 50', 50") and an indicator tape, and wherein the indicator tape is arranged on the member (12, 20, 70) and the sensor (50, 50', 50") is arranged on the other component, or vice versa;
and wherein the sensor (50, 50', 50") is configured to detect the indicators provided on the indicator tape to determine the relative rotational movement between the member and the component, wherein the robot further comprises at least one cover device (30; 40; 60) covering the indicator tape and at least the head of the sensor (50; 50'; 50") to protect the sensor device from dirt, **characterized in that** the cover device (30; 40; 60) is provided with brushes formed to prevent dirt from entering a gap between the cover device and a surface of the robot covered by the cover device and/or to strip dirt from the indicator tape.

2. The industrial robot (1) according to claim 1, wherein the cover device (30; 40; 60) is annular and encircles the pivot joint between the member (12, 20, 70) and the other component by at least 270°, preferably by at least 300°, more preferably by at least 330°, and most preferably by 360°.

3. The industrial robot (1) according to any one of the preceding claims, wherein the cover device (40; 60) is annular and has an L- or U-shaped cross-section and at least partially encircles the pivot joint between the member (20;70) and the other component, wherein the webs (43a, 43b; 63a, 63b) of the L- or U-shaped cross-section each lie in a plane and are directed towards the interior of the annular cover device, or wherein the webs (33a, 33b) of the L- or U-shaped cross-section form walls of a cylinder.

4. The industrial robot (1) according to claim 3, wherein the webs (43a, 43b; 63a, 63b) of the cover device are provided with brushes formed to prevent dirt from entering into a gap between the webs of the cover device and a surface of the robot covered by the cover device, and/or
wherein the webs of the cover device (30) are provided with brushes (56) configured to prevent dirt from entering into an area around the sensor head covered by the cover device (30; 30').

5. The industrial robot (1) according to claim 4, wherein the individual bristles or fibers of the brushes face in the same direction as the webs and protrude beyond the webs.

6. The industrial robot (1) according to any one of the preceding claims, wherein the cover device (40; 60) comprises at least one fastening element (44a, 44b; 64a, 64b), and is fastened to the component or to the member of the robot on which the sensor is located.

7. The industrial robot (1) according to any one of the preceding claims, wherein the other member (11) is the frame of the robot and the member (12) is the carousel of the robot, and
wherein the robot comprises a further member (20) rotatably supported on the carousel of the robot, and a second sensor device (50) for detecting the relative rotational movement between the carousel and the further member (20), wherein the second sensor device comprises a second sensor (50) and a second indicator tape, and wherein a second annular cover device (40) is arranged on the carousel or the further member (20) of the robot and covers the second indicator tape and at least the head of the second sensor (50) to protect the second sensor device from dirt.

8. The industrial robot according to any one of the preceding claims, wherein the cover device (40; 60) comprises an opening (45; 65) on its outside for receiving the head of the sensor (50; 50').

9. The industrial robot (1) according to any one of the preceding claims, wherein the indicator tape is a perforated steel tape and the sensor is an inductive sensor with transformer transducer.

## Revendications

1. Robot industriel (1), en particulier robot articulé, incluant :
au moins un élément (12, 20, 70) qui est monté à rotation sur une autre pièce structurelle du robot par l'intermédiaire d'une articulation tournante ;
un dispositif de capteur pour détecter le mouvement de rotation relatif entre l'élément (12, 20, 70) et l'autre pièce structurelle, le dispositif de capteur incluant un capteur (50, 50', 50") et une bande indicatrice, et la bande indicatrice étant disposée sur l'élément (12, 20, 70), et le capteur (50, 50', 50") étant disposé sur l'autre pièce structurelle ou inversement ;
et le capteur (50, 50', 50") étant agencé pour détecter les indicateurs prévus sur la bande indicatrice afin de déterminer le mouvement de rotation relatif entre l'élément et la pièce structurelle, le robot comportant en outre au moins un dispositif de recouvrement (30 ; 40 ; 60) qui recouvre la bande indicatrice et au moins la tête du capteur (50, 50', 50") afin de protéger le dispositif de capteur contre les saletés, **caractérisé en ce que** le dispositif de recouvrement (30 ; 40 ; 60) est muni de brosses qui sont conçues de façon à empêcher la pénétration de saletés dans un interstice entre le dispositif de recouvrement et une surface du robot recouverte par le dispositif de recouvrement et/ou à enlever des saletés de la bande indicatrice.

2. Robot industriel (1) selon la revendication 1, le dispositif de recouvrement (30 ; 40 ; 60) étant annulaire et entourant l'articulation tournante entre l'élément (12, 20, 70) et l'autre pièce structurelle sur au moins 270°, de préférence sur au moins 300°, plus préférentiellement sur au moins 330° et le plus préférentiellement sur 360°.

3. Robot industriel (1) selon l'une des revendications précédentes, le dispositif de recouvrement (40 ; 60) étant annulaire et possédant une section transversale en forme de L ou de U et entourant au moins en partie l'articulation tournante entre l'élément (20 ; 70) et l'autre pièce structurelle, les ailes (43a, 43b ; 63a, 63b) de la section transversale en forme de L ou de U se trouvant respectivement dans un plan et étant orientées vers l'intérieur du dispositif de recouvrement annulaire, et les ailes (33a, 33b) de la section transversale en forme de L ou de U formant des parois d'un cylindre.

4. Robot industriel (1) selon la revendication 3, les ailes (43a, 43b ; 63a, 63b) du dispositif de recouvrement étant munies de brosses qui sont conçues pour empêcher la pénétration de saletés dans un interstice entre les ailes du dispositif de recouvrement et une surface du robot recouverte par le dispositif de recouvrement, et/ou
les ailes du dispositif de recouvrement (30) étant munies de brosses (56) qui sont conçues pour empêcher la pénétration de saletés dans une zone autour de la tête de capteur qui est recouverte par le dispositif de recouvrement (30 ; 30').

5. Robot industriel (1) selon la revendication 4, les soies ou fibres individuelles des brosses étant orientées dans la même direction que les ailes et dépassant des ailes.

6. Robot industriel (1) selon l'une des revendications précédentes, le dispositif de recouvrement (40 ; 60) comportant au moins un organe de fixation (44a, 44b ; 64a, 64b) et étant fixé à la pièce structurelle ou à l'élément du robot sur lequel se trouve le capteur.

7. Robot industriel (1) selon l'une des revendications précédentes, l'autre pièce structurelle (11) étant le bâti du robot, et l'élément (12) étant le carrousel du robot, et
le robot comportant un autre élément (20), qui est monté à rotation sur le carrousel du robot, et un second dispositif de capteur (50) pour détecter le mouvement de rotation relatif entre le carrousel et l'autre élément (20), le second dispositif de capteur incluant un second capteur (50) et une seconde bande indicatrice, et un second dispositif de recouvrement annulaire (40) étant disposé sur le carrousel ou sur l'autre élément (20) du robot et recouvrant la seconde bande indicatrice et au moins la tête du second capteur (50) afin de protéger le second dispositif de capteur contre les saletés.

8. Robot industriel selon l'une des revendications précédentes, le dispositif de recouvrement (40 ; 60) comportant sur son côté extérieur une ouverture (45 ; 65) pour recevoir la tête du capteur (50 ; 50').

9. Robot industriel (1) selon l'une des revendications précédentes, la bande indicatrice étant une bande d'acier perforée, et le capteur étant un capteur inductif avec convertisseur à transformateur.
